# EUROPÄISCHE PATENTSCHRIFT

(11) **EP 1 116 017 B1**
(45) Veröffentlichungstag und Bekanntmachung des Hinweises auf die Patenterteilung: **17.09.2003**
(21) Anmeldenummer: 99942886.5
(22) Anmeldetag: 19.08.1999
(51) Int. Cl.: G01N 3/30, G01N 3/04

(54) **ANDRÜCKVORRICHTUNG ZUM ANDRÜCKEN EINER PROBE AN DAS WIDERLAGER EINER PRÜFMASCHINE FÜR KERBSCHLAGBIEGEVERSUCHE**
MACHINE FOR PRESSING A SAMPLE AGAINST THE ABUTMENT OF A TESTING MACHINE FOR NOTCHED BAR IMPACT BENDING TESTS
DISPOSITIF PRESSEUR PERMETTANT DE PLAQUER UN ECHANTILLON CONTRE LA BUTEE D'UNE MACHINE D'ESSAI DE RESILIENCE SUR DES BARREAUX ENTAILLES

(30) Priorität: 25.09.1998 DE 19844008
(43) Veröffentlichungstag der Anmeldung: 18.07.2001
(73) Patentinhaber: Forschungszentrum Karlsruhe GmbH, 76133 Karlsruhe (DE)
(72) Erfinder: RIETH, Michael, D-76628 Karlsruhe (DE); DAFFERNER, Bernhard, D-76703 Kraichtal (DE); KUNZE, Ralf, D-76135 Karlsruhe (DE); ERNST, Oliver, D-76133 Karlsruhe (DE)
(86) Internationale Anmeldenummer: EP9906063
(87) Internationale Veröffentlichungsnummer: WO00019181

(56) Entgegenhaltungen:
- DE-C- 19 614 966
- US-A- 5 487 299

## Beschreibung

Die Erfindung betrifft eine Andrückvorrichtung zum Andrücken einer Probe an das Widerlager einer Prüfmaschine für Kerbschlagbiegeversuche. Mit einer solchen Vorrichtung soll die Probe für den Kerbschlag derartig in Position gehalten werden, daß dieselbe unmittelbar am Widerlager anliegt und nicht noch durch den Hammer zunächst noch bei der Fallbewegung in diese Position geschoben werden muß. Die Aussage über den Kerbschlag wird nämlich zu Beginn des Schlages verfälscht, wenn die Probe zuerst noch am Auflager prellt.

In der DE 196 14 966 wird eine Prüfmaschine für Kerbschlagbiegeversuche beschrieben, die mit einer Andrückvorrichtung für die Probe ausgerüstet ist. Diese Andrückvorrichtung besteht aus einem am Fallhammer montierten Federpaar, das die Probe unmittelbar vor dem Schlag vollends in Position oder gegen das Widerlager schiebt, dann bei der Weiterbewegung des Hammers dort hingedrückt hält und schließlich während des Schlages darüber hinweg gleitet. Die Andrückvorrichtung ist eine am Fallhammer mitgeführte Vorrichtung, die für eine hohe Prüfrate nicht ausreichend zuverlässig arbeitet und außerdem an einem Kastenhammer nicht problemlos montierbar ist.

Der Erfindung liegt die Aufgabe zugrunde, eine Andrückvorrichtung an einer Prüfmaschine für Kerbschlagbiegeversuche zu konstruieren, mit der das Prellen der Probe am Auflager sicher vermieden, bzw. bis zu Beginn des Kerbschlages sicher beendet ist und die Probe spielfrei und bis auf das Eigengewicht auch kraftfrei anliegt.

Die Aufgabe wird durch eine Andrückvorrichtung gemäß den Merkmalen des Anspruchs 1 gelöst. Zwei axial bewegliche Stäbe, die sich links und rechts der Bahn des Fallhammers befinden, werden über ihre jeweilige Antriebseinrichtung senkrecht auf die auf das Auflager bis zu einem Anschlag geschobene Probe gefahren und drücken sie gegen das Widerlager. Auf den Stäben sitzt jeweils ein elastisches Bauelement, das beim Berühren der Probe teilweise auf den zugehörigen Stab zurückgeschoben wird. Werden die Stäbe wieder zurückgefahren, drücken die elastischen Bauelemente die Probe zunächst immer noch gegen das Widerlager und halten sie spielfrei in dieser Position, bis diese Bauelemente entspannt sind und sich dann vollends völlig kraftfrei von der Probe lösen. Die beiden Stäbe mit ihrer jeweiligen Antriebs- und Lagereinrichtung sind auf jeweils einer Halterung untergebracht, die an dem Auflager montiert sind.

Eine einfache Ausführung der elastischen Bauelemente sind Schraubenfedern (Anspruch 2). Die beiden Stäbe werden einmal durch ihre Antriebseinrichtung geführt und können durch je ein Gleitlager nur eine definierte axiale Hubbewegung ausführen (Anspruch 3). Die Antriebseinheiten sind einerseits Elektromagneten, so daß der jeweilige Stab den Magnetkern bildet, d. h. die Stäbe sind dann aus weichmagnetischem Material (Anspruch 4). Die einfachste Ausführung der Antriebseinheit ist ein Magnet, dessen magnetische Achse nur eine Richtung hat (Anspruch 5), dann braucht der Stab aber eine ständig wirkende Rückholeinrichtung (Anspruch 10), die eine weitere Schraubenfeder um ihn sein kann (Anspruch 11) und an dem Gleitlager und der Antriebseinrichtung als auch an dem Stab selber verankert ist.. Der Elektromagnet kann aber auch bidirektional sein, d. h. seine Magnetfeldachse ist umkehrbar (Anspruch 6), dann kann die Rückstelleinrichtung entfallen.

Die beiden Antriebseinheiten lassen sich mit derselben Wirkungsweise auch hydraulisch oder pneumatisch aufbauen (Ansprüche 8 und 9). Für beide Antriebseinheiten mit ihrem jeweilig zugehörigen Stab ist aber für die Fronteinstellung der Federn wichtig, daß sie axial justierbar sind, damit die Federn beim Vorfahren der Stäbe gleichzeitig und gleichartig auf die Probe treffen und sich beim Zurückfahren der Stäbe ebenfalls gleichzeitig und gleichartig - und kraftfrei von der Probe entfernen.

Der Vorteil dieser Art Andrückvorrichtung ist, daß sie mechanisch absolut von dem Fallhammer entkoppelt ist, d. h. die Probe zu Beginn des Kerbschlags nicht mehr prellen kann und spielfrei in der vorgesehenen Position am Widerlager anliegt.

Ein Ausführungsbeispiel der Erfindung wird in folgendem anhand der Zeichnung erläutert. Es zeigt:
- Figur 1: die Situation vor der Andrückaktion,
- Figur 2: die angedrückte Probe,
- Figur 3: die spielfrei am Widerlager anliegende Probe.

Die beiden Antriebseinheiten der Andrückvorrichtung sind Miniaturhubmagnete, die den zugehörigen Stab als Magnetkern haben. Der Stab ist mit seinem einen Ende in den Elektromagneten eingetaucht und wird je nach Feldrichtung noch mehr hereingezogen oder ausgestoßen. Der Stab liegt mit seinem mittleren Bereich in dem Gleitlager, so daß er nur eine axiale Hubbewegung ausführen kann. Am andern Ende des Stabes ist das elastische Bauelement in Form der Schraubenfeder teilweise übergestülpt und verankert.
Der freie Endbereich des Stabes hat einen kleineren Durchmesser, so daß beim Andrücken der Feder an die Probe bei der axialen Vorwärtsbewegung des Stabes die Feder teilweise auf den Stab zurückgedrückt wird. Die Stäbe selber werden nicht soweit vorgefahren, daß ihre Stirn dieselbe berührt.

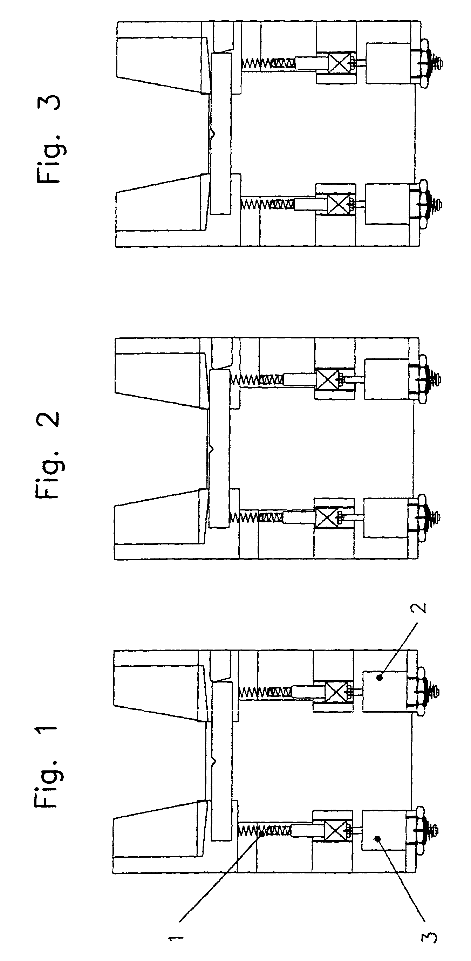

In Figur 1 ist die Probe bis zu dem Anschlag auf das Auflager geschoben. Sie berührt das Widerlager nicht, es besteht ein kleiner Abstand dort hin. Deswegen wird die Andrückvorrichtung aktiviert, ihre beiden Stäbe fahren vor, berühren mit der freien Stirnseite ihrer Schraubenfedern die aufliegende Probe gleichzeitig und schieben sie mit weiterem Ausfahren gegen das Widerlager, ohne daß die Stabenden die Probe berühren (Figur 2).
Jetzt liegt die Probe spielfrei, aber mit Federkraft angedrückt, am Widerlager an. Beim Zurückfahren der beiden Stäbe berühern die beiden Federn die Probe noch so lange, bis sie völlig entspannt sind, um sich dann vollends kraftfrei von derselben zu lösen, so daß die Probe spiel- und völlig kraftfrei frei am Widerlager anliegt (Figur 3). Jetzt erst wird der Fallhammer zum Kerbschlagbiegeversuch losgelassen.

### Bezugszeichenliste

- 1: Andrückfeder, Schraubenfeder
- 2: Hubmagnet rechts
- 3: Hubmagnet links

## Patentansprüche

1. Andrückvorrichtung zum Andrücken einer Probe an das Auflager einer Prüfmaschine für Kerbschlagbiegeversuche, bestehend aus:
zwei axial beweglichen Stäben, die einerseits in einer jeweils zugehörigen Antriebseinheit und andrerseits in einer jeweils weiteren zugehörigen Führung geführt sind,
zwei, jeweils auf einem Stab aufgesetzten, elastischen Bauelementen, die mit dem Material der Probe nicht haften und durch die hindurch der zugehörige Stab mit seinem freien Stabende dringen kann,
aus zwei Halterungen, die am Auflager angebracht sind, auf die jeweils ein Stab mit seiner Führung und Antriebseinheit derartig montiert ist, daß die beiden freien Stabenden senkrecht auf das Widerlager weisen, die durch die beiden Stabachsen aufgespannte Ebene senkrecht zur Bewegungsebene des Hammers der Prüfmaschine steht und der Hammer beim Fall diese aufgespannte Ebene zwischen den Stäben und parallel zu den Achsen durchtrennt.

2. Andrückvorrichtung nach Anspruch 1, **dadurch gekennzeichnet, daß** die beiden Bauelemente Schraubenfedern sind.

3. Andrückvorrichtung nach Anspruch 2, **dadurch gekennzeichnet, daß** die beiden Führungen Gleitlager sind.

4. Andrückvorrichtung nach Anspruch 3, **dadurch gekennzeichnet, daß** die beiden Antriebseinheiten Elektromagneten sind und der zugehörige Stab den Magnetkern bildet.

5. Andrückvorrichtung nach Anspruch 4, **dadurch gekennzeichnet, daß** die Elektromagneten eindirektional betreibbar sind.

6. Andrückvorrichtung nach Anspruch 4, **dadurch gekennzeichnet, daß** die Elektromagneten bidirektional betreibbar sind.

7. Andrückvorrichtung nach Anspruch 3, **dadurch gekennzeichnet, daß** die beiden Antriebseinheiten Hydraulik- oder Pneumatikzylinder sind und der zugehörige Stab im Zylinderbereich als Stempel ausgebildet ist.

8. Andrückvorrichtung nach Anspruch 7, **dadurch gekennzeichnet, daß** die Zylinder und ihr zugehöriger Kolben jeweils ein Einkammersystem bilden.

9. Andrückvorrichtung nach Anspruch 7, **dadurch gekennzeichnet, daß** die Zylinder und ihr zugehöriger Kolben jeweils ein Zweikammersystem bilden.

10. Andrückvorrichtung nach einem der Ansprüche 5 und 8, **dadurch gekennzeichnet, daß** an den beiden Stäben jeweils eine ständig wirkende Rückholeinrichtung ansetzt, die zumindest indirekt an der zugehörigen Halterung verankert ist.

11. Andrückvorrichtung nach einem der Ansprüche 5 und 8, **dadurch gekennzeichnet, daß** die Rückholeinrichtung eine über den Stab gestülpte Schraubenfeder ist.

12. Andrückvorrichtung nach Anspruch 11, **dadurch gekennzeichnet, daß** Stab und zugehörige Antriebseinheit axial justierbar sind.

## Claims

1. Press-on system for pressing a specimen against the support of a testing machine for notch impact bending tests, consisting of:
Two axially movable rods that are borne in the corresponding driving units, on the one hand, and in another pertinent bearing unit each, on the other,
two elastic components, of which one is attached to each rod, which do not adhere to the specimen material and which may be penetrated by the free end of the respective rod, and
two holding units that are fixed to the support and to which a rod each with its bearing and driving unit is assembled such that both free rod ends point vertically to the abutment, the plane spanned by both rod axes is located vertical to the movement plane of the hammer of the testing machine, and the hammer separates this plane between the rods parallel to the axes while dropping.

2. Press-on system according to Claim 1, **characterized by** both components being helical springs.

3. Press-on system according to Claim 2, **characterized by** both bearings being sliding bearings.

4. Press-on system according to Claim 3, **characterized by** both driving units being solenoids and the respective rod forming the magnetic core.

5. Press-on system according to Claim 4, **characterized by** the fact that the solenoids can be operated unidirectionally.

6. Press-on system according to Claim 4, **characterized by** the fact that the solenoids can be operated bidirectionally.

7. Press-on system according to Claim 3, **characterized by** both driving units being hydraulic or pneumatic cylinders and the respective rod in the cylinder range being formed as a die.

8. Press-on system according to Claim 7, **characterized by** the cylinders and their respective piston forming a one-chamber system.

9. Press-on system according to Claim 7, **characterized by** the cylinders and the respective piston forming a two-chamber system.

10. Press-on system according to one of Claims 5 and 8, **characterized by** a constantly acting return unit being attached to each of both rods, which is at least indirectly fixed to the respective holding unit.

11. Press-on system according to one of Claims 5 and 8, **characterized by** the return unit being a helical spring put over the rod.

12. Press-on system according to Claim 11, **characterized by** the rod and the respective driving unit being axially adjustable.

## Revendications

1. Dispositif de pression pour presser une éprouvette sur le support dune machine de tests de résilience, composé de:
deux barres déplaçables dans le sens axial, glissant chacune dans son unité de commande respective d'une part et dans sa coulisse supplémentaire d'autre part,
deux éléments de construction élastiques posés chacun sur une barre, n'adhérant pas au matériau de l'éprouvette et qui peuvent être pénétrés par l'extrémité libre de la barre associée,
deux fixations disposées sur le support, sur chacune desquelles une barre avec sa coulisse et son unité de commande est montée de telle façon que les deux extrémités libres de la barre sont orientées perpendiculairement par rapport au sommier, que le plan bridé par les deux axes de barre est perpendiculaire au plan de déplacement du marteau de la machine de tests, et que le marteau tombant sectionne ce plan bridé entre les barres et parallèlement aux axes.

2. Dispositif de pression selon la revendication 1, **caractérisé en ce que** les deux éléments de construction sont des ressorts cylindriques.

3. Dispositif de pression selon la revendication 2, **caractérisé en ce que** les deux coulisses sont des paliers glisseurs.

4. Dispositif de pression selon la revendication 3, **caractérisé en ce que** les deux unités de commande sont des électro-aimants et que la barre associée forme le tore magnétique.

5. Dispositif de pression selon la revendication 4, **caractérisé en ce que** les électro-aimants peuvent fonctionner en mode monodirectionnel.

6. Dispositif de pression selon la revendication 4, **caractérisé en ce que** les électro-aimants peuvent fonctionner en mode bidirectionnel.

7. Dispositif de pression selon la revendication 3, **caractérisé en ce que** les deux unités de commande sont des cylindres hydrauliques ou pneumatiques et que la barre associée présente la forme d'un poinçon dans la partie cylindrique.

8. Dispositif de pression selon la revendication 7, **caractérisé en ce que** les cylindres et leur piston associé forment chacun un système à chambre unique.

9. Dispositif de pression selon la revendication 7, **caractérisé en ce que** les cylindres et leur piston associé forment chacun un système à deux chambres.

10. Dispositif de pression selon une des revendications 5 et 8, **caractérisé en ce qu'**un dispositif de rappel permanent est attaché à chacune des deux barres, qui est ancré du moins indirectement dans le support associé.

11. Dispositif de pression selon une des revendications 5 et 8, **caractérisé en ce que** le dispositif de rappel est un ressort cylindrique recouvrant la barre.

12. Dispositif de pression selon la revendication 11, **caractérisé en ce que** la barre et l'unité de commande associée peuvent être ajustées dans le sens axial.
